# EUROPEAN PATENT APPLICATION

(11) **EP 4 601 045 A1**
(43) Date of publication of application: **13.08.2025**
(21) Application number: 23885864.1
(22) Date of filing: 02.11.2023
(51) Int. Cl.: H01M 4/62, H01M 4/13, H01M 4/131, H01M 4/1391, H01M 4/48, H01M 4/485

(54) **NEGATIVE ELECTRODE MATERIAL, NEGATIVE ELECTRODE, AND BATTERY**

(30) Priority: 04.11.2022 JP 2022177632
(71) Applicant: Sumitomo Chemical Company, Limited, Tokyo 103-6020 (JP)
(72) Inventor: DOI, Atsunori, Niihama-shi, Ehime 792-8521 (JP)
(74) Representative: Vossius & Partner Patentanwälte Rechtsanwälte mbB
(86) International application number: PCT/JP2023/039684
(87) International publication number: WO 2024/096110

(57) **Abstract**

A negative electrode material contains a negative electrode active material and a solid electrolyte material, wherein the solid electrolyte material contains an alkali metal element, a metal element except alkali metal elements or a metalloid element, and a halogen, and the metal element except alkali metals or the metalloid element includes at least one of Zr and In.

## Description

### Technical Field

The present disclosure relates to a negative electrode material, a negative electrode, and a battery.

### Background Art

In recent years, solid electrolytes have attracted attention as electrolytes used in electrochemical devices such as lithium ion batteries. Since the solid electrolytes are excellent in high-temperature resistance, high voltage resistance, and the like as compared to conventional electrolytic solutions, it is considered that the solid electrolytes are useful for improving battery performance such as safety, high capacity, rapid charge and discharge, and pack energy density.

### Citation List

### Patent Literature

Patent Literature 1: WO 2019/146295 A

### Summary of Invention

### Technical Problem

Here, a solid electrolyte may also be included in a negative electrode of a battery in order to increase the ionic conductivity. However, some negative electrode materials containing a conventional solid electrolyte cannot be stably charged and discharged.

The present disclosure has been made in view of the above circumstances, and an object of the present disclosure is to provide a negative electrode material having good charge/discharge characteristics, and a negative electrode and a battery including such a negative electrode material.

### Solution to Problem

The present disclosure includes the following embodiments [1] to [9].
[1] A negative electrode material, containing a negative electrode active material and a solid electrolyte material, wherein
   the solid electrolyte material contains an alkali metal element, a metal element except alkali metal elements or a metalloid element, and a halogen, and
   the metal element except alkali metals or the metalloid element includes at least one of Zr and In.
[2] The negative electrode material according to [1], wherein
   the solid electrolyte material contains a compound represented by A_{α}M_{β}Z_{γ}D_{ζ}O_{η},
   wherein A is an alkali metal element, M is at least one of Zr and In, Z is a halogen element, D is at least one of P and S, and 1.6 ≤ α ≤ 3.5, 0 < β ≤ 1.2, 3 ≤ γ ≤ 6.5, 0 ≤ ζ ≤ 0.5, and 0 ≤ η ≤ 2 are satisfied.
[3] The negative electrode material according to [1] or [2], wherein a volume ratio of the negative electrode active material to a total volume of the negative electrode active material and the solid electrolyte material is 0.30 to 0.90.
[4] The negative electrode material according to any one of [1] to [3], wherein the negative electrode active material is an oxide containing titanium.
[5] The negative electrode material according to any one of [1] to [4], further containing an ionic liquid.
[6] The negative electrode material according to any one of [1] to [5], wherein in the solid electrolyte material, a total substance amount of Zr and In is larger than a total substance amount of the alkali metal element, and the metal element except Zr and In or the metalloid element.
[7] The negative electrode material according to any one of [1] to [6], wherein in the solid electrolyte material, a content of Y in terms of substance amount is smaller than a total substance amount of Zr and In.
[8] A negative electrode, including the negative electrode material according to any one of [1] to [7].
[9] A battery, including the negative electrode according to [8].

### Advantageous Effects of Invention

According to the present disclosure, it is possible to provide a negative electrode material having good charge/discharge characteristics, and a negative electrode and a battery including such a negative electrode material.

### Brief Description of Drawings

FIG. 1 is a diagram showing results (first cycle and second cycle) of a charge/discharge test of a secondary battery of Example 1.
FIG. 2 is a diagram showing results (third cycle and fourth cycle) of a charge/discharge test of the secondary battery of Example 1.
FIG. 3 is a diagram showing results of a charge/discharge test of a secondary battery of Example 2.
FIG. 4 is a diagram showing results of a charge/discharge test of a secondary battery of Example 3.
FIG. 5 is a diagram showing results of a charge/discharge test of a secondary battery of Example 4.
FIG. 6 is a diagram showing results of a charge/discharge test of a secondary battery of Example 5.

### Description of Embodiments

A negative electrode material of the present embodiment contains a negative electrode active material and a solid electrolyte material, and the solid electrolyte material contains an alkali metal element, a metal element except alkali metal elements or a metalloid element, and a halogen. The metal element except alkali metals or the metalloid element may include at least one of Zr and In.

The negative electrode active material may be a substance that charges and discharges at 0.5 V or more on the basis of Li/Li+, and examples thereof include alkali metal elements, simple substances of elements such as Si, P, Sn, In, and Au, alloys or composites containing an alkali metal element or an element such as Si, P, Sn, In, or Au, such as Li-In, Si-Mn, Si-Co, and Si-Ni, carbon materials such as graphite, substances in which alkali metal ions are inserted between layers of the carbon materials, and oxides containing titanium. The alkali metal element may be Li, Na, or K, may be Li or Na, or may be Li. The negative electrode active material may contain one or more types selected selected from the group consisting of an alkali metal element; a simple substance of an element of Si, P, Sn, In, or Au; an alloy or a composite containing one or more types of elements selected from an alkali metal element; Si, P, Sn, In, and Au; and an oxide containing titanium.

The oxide containing titanium may be a compound given by a compositional formula: AₛTiOₜ (A is an alkali metal element, and s ≥ 0 is satisfied). Here, the alkali metal element A may be Li, Na, or K, may be Li or Na, or may be Li. In the compositional formula, s may be 0.1 to 2, 0.3 to 1.5, or 0.5 to 1. In the compositional formula, t may be 2 to 3, or 2.2 to 2.8. Specifically, examples of the oxide containing titanium include A₄Ti₅O₁₂ (A is an alkali metal and may be Li).

The content of the negative electrode active material in the negative electrode material (or negative electrode) may be 50 mass% or more, 60 mass% or more, or 70 mass% or more with respect to the total amount of the negative electrode material. The content of the negative electrode active material in the negative electrode material may be 99 mass% or less, 95 mass% or less, or 90 mass% or less with respect to the total amount of the negative electrode material. The content of the negative electrode active material in the negative electrode material may be 50 to 99 mass%, 60 to 95 mass%, or 70 to 90 mass% with respect to the total amount of the negative electrode material. The volume ratio of the negative electrode active material to the total volume of the negative electrode active material and the solid electrolyte material may be 0.30 to 0.90. The volume ratio of the solid electrolyte to the total volume of the negative electrode active material and the solid electrolyte material may be 0.30 to 0.90, 0.30 to 0.70, 0.35 to 0.70, 0.40 to 0.70, more than 0.50 and 0.70 or less, or 0.53 to 0.70. The volume ratio of the solid electrolyte to the total volume of the negative electrode active material and the solid electrolyte material may be 0.30 or more, 0.30 or more, 0.35 or more, 0.40 or more, more than 0.50, or 0.53 or more. The content of the solid electrolyte material in the negative electrode material may be 30 to 90 mass%, 30 to 70 mass%, or 35 to 70 mass% with respect to the total amount of the negative electrode active material and the solid electrolyte.

The negative electrode material contains a solid electrolyte material (halide-based solid electrolyte) containing an alkali metal element, a metal element except alkali metal elements or a metalloid element, and a halogen element. Hereinafter, the solid electrolyte material containing an alkali metal element, a metal element except alkali metal elements or a metalloid element, and a halogen element is also referred to as a first solid electrolyte material. The first solid electrolyte material may be one satisfying at least one of the following (A) to (C). (A) The first solid electrolyte material contains In as the metal element except alkali metal elements. (B) The first solid electrolyte material contains Zr as the metal element except alkali metal elements, and contains two or more types of halogen elements. (C) The first solid electrolyte material further contains an oxygen element.

The alkali metal element contained in the first solid electrolyte material may be any of Li, Na, K, Rb, and Cs, and at least one type of Li, Na, and K may be contained, at least one of Li and Na may be contained, or Li may be contained.

Among the alkali metal elements contained in the first solid electrolyte material, the proportion of one type of alkali metal element may be 80 mol% or more, 90 mol% or more, or 95 mol% or more. The one type of alkali metal element may be at least one type of Li, Na, and K, may be at least one of Li and Na, or may be Li.

The content of the alkali metal element in the first solid electrolyte material may be 15 to 30 mol%, 18 to 28 mol%, or 20 to 27 mol% with respect to the total amount of atoms contained in the first solid electrolyte material.

The metal element except alkali metal elements or the metalloid element is not particularly limited, and examples thereof include divalent to pentavalent elements, and one or more types selected from the group consisting of trivalent elements and tetravalent elements may be contained. The first solid electrolyte material may contain one type or two or more types of metal elements except alkali metal elements or metalloid elements.

Examples of the divalent element include an alkaline earth metal and Zn. The alkaline earth metal may be at least one type of Mg, Ca, Sr, and Ba, may be at least one of Mg and Ca, or may be Mg. Examples of the trivalent metal element include Sc, La, Ce, Pr, Nd, Pm, Sm, Eu, Gd, Tb, Dy, Ho, Er, Yb, Lu, Y, Al, Ga, In, Bi, and Sb. Examples of the tetravalent element include Zr, Ti, Hf, and Sn, and the tetravalent element may be Zr. Examples of the pentavalent metal element include Nb and Ta. Examples of a hexavalent or higher element include W.

The metal element except alkali metal elements or the metalloid element may contain at least one of In and Zr. The content of the metal element except alkali metal elements or the metalloid element in the first solid electrolyte material is preferably 8 to 15 mol%, more preferably 8 to 13 mol%, and still more preferably 9 to 12 mol% based on all elements contained in the first solid electrolyte material.

In the first solid electrolyte material, the total substance amount of Zr and In may be larger than the total substance amount of the alkali metal element and the metal element except Zr and In or the metalloid element. When the first solid electrolyte material contains only one of Zr and In, the total substance amount is the content of the contained element. The total substance amount of Zr and In in the first solid electrolyte material may be 60 mol% or more, 70 mol% or more, 80 mol% or more, or 90 mol% or more of the total substance amount of the metal element except alkali metal elements or the metalloid element.

In the first solid electrolyte material, the content of Y in terms of substance amount may be smaller than the total substance amount of Zr and In. When the first solid electrolyte material contains only one of Zr and In, the total substance amount is the content of the contained element. The content of Y in the first solid electrolyte may be 40 mol% or less, 30 mol% or less, 20 mol% or less, or 10 mol% or less with respect to the total substance amount of the metal element except alkali metal elements or the metalloid element. The first solid electrolyte material need not substantially contain Y.

The first solid electrolyte material may contain one type of element of the metal elements except alkali metal elements or the metalloid elements in an amount of 70 mol% or more, 75 mol% or more, or 80 mol% or more with respect to the total amount of the metal elements except alkali metal elements or the metalloid elements. In this case, the one type of element may be a trivalent or tetravalent element, or may be In or Zr. The first solid electrolyte material may contain In in an amount of 70 mol% or more, 75 mol% or more, or 80 mol% or more with respect to the total amount of the metal elements except alkali metal elements or the metalloid elements. In this case, the first solid electrolyte material contains a metal element except alkali metal elements or a metalloid element (also referred to as dopant element X1) other than the one type of element. The dopant element X1 is an element different from the one type of element. When the one type element is a trivalent element, the dopant element X1 may be at least one type of element selected from the group consisting of Zr, Sn, Ti, Nb, Ta, Bi, and Y, or may be at least one type of element selected from the group consisting of Zr, Sn, Nb, and Ta. When the one type of element is a tetravalent element, the dopant element X1 may be at least one type of element selected from the group consisting of Bi, Al, Ga, In, Sc, Sm, Sb, La, Zn, Sn, and an alkaline earth metal, or may be at least one type of element selected from the group consisting of Bi, La, Zn, and Sn.

The halogen element contained in the first solid electrolyte material of the present embodiment may be any of F, Cl, Br, and I, and at least one type of Cl, Br, and I may be contained, at least one of Cl and Br may be contained, or Cl may be contained. The ion conductive substance may contain only one type of halogen element, or may contain two or more types of halogen elements. When the first solid electrolyte material contains Zr as the metal element except alkali metal elements, the first solid electrolyte material may contain two or more types of halogen elements, may contain Cl and a halogen element other than Cl, and may contain Cl and Br. The content of the halogen element other than Cl, or Br may be 10 mol% or less, 0.1 to 10 mol%, or 1 to 8 mol% with respect to the total amount of the halogen elements contained in the solid electrolyte material.

The content of the halogen element in the first solid electrolyte material is preferably 40 to 70 mol% and more preferably 45 to 68 mol% based on all elements included in the halogen element.

The first solid electrolyte material may contain one type of element of the halogen elements in an amount of 80 mol% or more, 85 mol% or more, or 90 mol% or more with respect to the total amount of the halogen elements. The one type of halogen element may be Cl or Br, or may be Cl. In this case, the first solid electrolyte material contains a halogen element (also referred to as dopant element X2) other than the one type of halogen element. When the one type of halogen element is Cl, the dopant element X2 may be at least one of Br and I, or may be Br.

The first solid electrolyte material may contain at least one of P and S (also referred to as dopant element X3). The content of the dopant element X3 in the first solid electrolyte material may be 0.05 to 5 mol%, 0.1 to 3 mol%, 0.2 to 2 mol%, or 0.3 to 1 mol% with respect to the total amount of atoms contained in the first solid electrolyte material.

When the first solid electrolyte material contains at least one of P and S, the first solid electrolyte material may contain a tetravalent metal element or a metalloid element. Examples of the tetravalent metal element or the metalloid element include Zr, Ti, and Hf, and the tetravalent metal element or the metalloid element may be Zr. In addition, at least one of Hf and Mg may be contained as the dopant element X2.

The content of the dopant element X3 in the first solid electrolyte material may be 50 mol% or less, 1 to 30 mol%, 1 to 20 mol%, or 2 to 10 mol% of the content of the tetravalent metal element or the metalloid element. The content of the dopant element X in the first solid electrolyte material may be 20 mol% or less, 15 mol% or less, 10 mol% or less, or 8 mol% or less of the content of the tetravalent metal element or the metalloid element.

The first solid electrolyte material may have a hexagonal crystal structure, and may have a crystal structure belonging to the space group P6₃mc. The solid electrolyte material having a hexagonal crystal structure may contain at least one type of element selected from the group consisting of Sc, La, Y, Ga, In, Bi, Sb, Ge, Zr, Sn, Nb, and Ta, and may contain Sc.

The first solid electrolyte material may contain a compound represented by the following formula (A).

A_{α}M_{β}Z_{γ}D_{ζ}O_{η} ··· (A)

Here, A is an alkali metal, M is a metal element except alkali metal elements or a metalloid element, Z is a halogen element, D is at least one of P and S, and 1.6 ≤ α ≤ 3.5, 0 < β ≤ 1.2, 3 ≤ γ ≤ 6.5, 0 ≤ ζ ≤ 0.5, and 0 ≤ η ≤ 2 are satisfied.

Examples of the compound represented by formula (A) include compounds represented by the following formulae (1) to (3).

A_{α1}M_{β1}Z_{6-δ1}X1_{ε11}X2_{ε12} ··· (1)

A_{α2}M_{β2}X2_{ε21}Z_{6-γ2}X1_{ε22} ··· (2)

A_{α3}M_{β3}X1_{ε31}Z_{δ3}D_{ζ}O_{η} ··· (3)

In formula (1), A, M, and Z are an alkali metal element, a trivalent metal element or a metalloid element, and a halogen element, respectively, and specific examples thereof include those described above. M preferably includes In. X1 and X2 are a dopant element X1 and a dopant element X2, respectively, and specific examples thereof include those described above. α1 may be 2 ≤ α1 ≤ 3.5, or 2.5 ≤ α1 ≤ 3. β1 may be 0.5 ≤ β1 ≤ 1.1, or 0.5 ≤ β1 ≤ 1. δ1 may be 0 ≤ δ1 ≤ 1, or 0 ≤ δ1 ≤ 0.5. ε11 may be 0 ≤ ε11 ≤ 0.7, 0 < ε11 ≤ 0.5, or 0.01 ≤ ε11 ≤ 0.3. ε12 may be 0 ≤ ε12 ≤ 0.7, 0 < ε11 ≤ 0.5, or 0.01 ≤ ε11 ≤ 0.3.

In formula (2), A, M, and Z are an alkali metal element, a tetravalent metal element or a metalloid element, and a halogen element, respectively, and specific examples thereof include those described above. M preferably contains Zr. X1 and X2 are a dopant element X1 and a dopant element X2, respectively, and specific examples thereof include those described above. α2 may be 1.6 ≤ α2 ≤ 2.5, 1.8 ≤ α2 ≤ 2.4, or 2 ≤ α2 ≤ 2.3. β2 may be 0 < β2 ≤ 1.1, 0.5 ≤ β2 ≤ 1, or 0.8 ≤ β2 ≤ 1. γ2 may be 0 ≤ γ2 < 1, 0.01 ≤ γ2 ≤ 0.8, 0.02 ≤ γ2 ≤ 0.7, 0.1 ≤ γ2 ≤ 0.6, or 0.2 ≤ γ2 ≤ 0.6. ε21 may be 0 ≤ ε21 ≤ 0.7, 0 < ε21 ≤ 0.5, or 0.01 ≤ ε21 ≤ 0.3. ε22 may be 0 ≤ ε22 ≤ 0.8, or 0 < ε21 ≤ 0.6. When X2 is iodine, ε21 may be 0.01 ≤ ε21 ≤ 0.3, or 0.015 ≤ ε21 ≤ 0.1.

In formula (3), A, M, and Z are an alkali metal element, a tetravalent metal element or a metalloid element, and a halogen element, respectively, and specific examples thereof include those described above. M preferably contains Zr. X1 and D are a dopant element X1 and a dopant element X3, respectively, and specific examples thereof include those described above. α may be 1.5 ≤ α ≤ 3, 1.8 ≤ α3 ≤ 2.5, 1.9 ≤ α3 ≤ 2.3, or 1.95 ≤ α3 ≤ 2.2. β may be 0.5 ≤ β ≤ 2, 0.7 ≤ β3 ≤ 1.4, 0.8 ≤ β3 ≤ 1.2, or 0.9 ≤ β3 ≤ 1.1. ζ may be 0.005 ≤ ζ ≤ 0.5, 0.01 ≤ ζ ≤ 0.2, 0.02 ≤ ζ ≤ 0.15, or 0.025 ≤ ζ ≤ 0.10. δ3 may be 3.5 ≤ δ3 ≤ 5, 3.7 ≤ δ3 ≤ 4.3, or 3.8 ≤ δ3 ≤ 4.1. η may be 0.1 ≤ η ≤ 1.5, 0.7 ≤ η ≤ 1.5, 0.8 ≤ η ≤ 1.3, or 0.9 ≤ η ≤ 1.1.

The first solid electrolyte material may have a particle shape. In this case, the average particle size of the first solid electrolyte material may be 1 to 50 µm. The particle of the first solid electrolyte material may have a rugged structure with a size of 0.5 to 2 µm. In the particle of the first solid electrolyte material, a microcrack with a size of 0.5 µm or more need not exist.

A method for producing the first solid electrolyte material is not particularly limited, and examples thereof include a method including a step of performing ball milling on a raw material. Annealing may be performed on the product after ball milling. When a hexagonal solid electrolyte material is obtained, the method for producing the first solid electrolyte material may be a method including a step of heating a raw material under a pressure of 1 GPa or more.

The raw material is not particularly limited, and may be, for example, an alkali metal halide, a chloride of a metal element except alkali metals or a metalloid element, and a compound containing the dopant element X1 or X2. When the dopant element is X1, the compound containing the dopant element may be a halide of X1. When the dopant element is X2, the compound containing the dopant element may be an alkali metal bromide or an alkali metal iodide. It is preferable to mix the raw materials before performing ball milling, and it is more preferable to mix the raw materials under an inert atmosphere (for example, Ar atmosphere).

The conditions of the ball milling are not particularly limited, and can be set to 10 to 100 hours at a rotational speed of 200 to 700 rpm. The grinding time is preferably 24 hours to 72 hours, and more preferably 36 to 60 hours.

The balls used for the ball milling are not particularly limited, and zirconia balls can be used. The size of the balls used is not particularly limited, and balls of 2 mm to 10 mm can be used.

The raw materials are sufficiently mixed by performing the ball milling for the above-described time, and the mechanochemical reaction is promoted, so that the ionic conductivity of the obtained compound can be improved.

The ball milling may include multi-stage steps with different rotational speeds. For example, the step of performing ball milling may include a first step, a second step, and a third step in this order, and the rotational speed in the second step may be higher than that in the first step and the third step. In this case, the rotational speed in the third step may be higher than that in the first step.

Annealing is preferably performed under an inert atmosphere or under vacuum. The annealing temperature is preferably, for example, 150 to 300°C, and more preferably 200 to 250°C. The annealing time may be, for example, 1 to 10 hours, and is preferably 3 to 6 hours.

The negative electrode material of the present embodiment can be used as a composition for forming a negative electrode. The negative electrode material of the present embodiment can be used as a composition for forming a negative electrode of an electrochemical device such as a capacitor or a battery. Examples of the battery include batteries that perform charge and discharge by movement of alkali metal ions, such as a lithium ion battery and a sodium ion battery. The battery may be a primary battery, a secondary battery, or an all-solid-state battery. The battery of the present embodiment includes a negative electrode, a positive electrode, and an electrolyte layer disposed between the negative electrode and the positive electrode. The negative electrode may be formed of a negative electrode material on a current collector. The positive electrode may be formed of a positive electrode material on a current collector.

The negative electrode material may further contain a polymer electrolyte, a binding resin, a conductive aid, an organic solvent, an ionic liquid, or the like as necessary.

The negative electrode material of the present embodiment may further contain a binding resin (binder), a conductive aid, or the like. The binding resin is not particularly limited, and examples thereof include a fluorine-based resin. The fluorine-based resin is preferably a resin having a carbon chain as a main chain. The carbon chain may be one formed by radical polymerization of an ethylenically unsaturated group. Examples of the fluororesin include poly(vinylidene fluoride-co-hexafluoropropylene) (PVDF-HFP) and polyvinylidene fluoride (PVDF). The content of the binding resin in the negative electrode material may be 0.5 to 10 mass% or 1 to 7 mass%.

Examples of the conductive aid include graphites such as natural graphite (scaly graphite or the like) and artificial graphite; carbon blacks such as acetylene black, Ketjen black, channel black, furnace black, lamp black, and thermal black; and carbon fibers. The content of the conductive aid in the electrode material may be 0.5 to 10 mass% or 1 to 7 mass%.

The solid electrolyte material may contain a solid electrolyte material (hereinafter, also referred to as second solid electrolyte material) other than the first solid electrolyte material.

The second solid electrolyte material is not particularly limited, and may be an oxide (oxide-based solid electrolyte), a sulfide (sulfide-based solid electrolyte), a hydride (hydride-based solid electrolyte), or the like. The second solid electrolyte material may contain an alkali metal element.

### (Oxide-based Solid Electrolyte)

Examples of the oxide-based solid electrolyte include oxides such as a perovskite-type oxide, a NASICON-type oxide, a LISICON-type oxide, and a garnet-type oxide, and oxides obtained by doping the oxides with other cations or anions.

Examples of the perovskite-type oxide include Li-La-Ti-based oxides such as LiₐLa₁₋ₐTiO₃ (0 < a < 1), Li-La-Ta-based oxides such as Li₃La₁₋₃TaO₃ (0 < b < 1), and Li-La-Nb-based oxides such as Li_{c}La_{1-c}NbO₃ (0 < c < 1).

Examples of the NASICON-type oxide include Li_{1+d}Al_{d}Ti_{2-d}(PO₄)₃ (0 ≤ d ≤ 1). The NASICON-type oxide is an oxide represented by LiₘM¹ₙM²ₒPₚO_{q} (in the formula, M¹ is one or more elements selected from the group consisting of B, Al, Ga, In, C, Si, Ge, Sn, Sb, and Se, M² represents one or more elements selected from the group consisting of Ti, Zr, Ge, In, Ga, Sn, and Al, and m, n, o, p, and q are arbitrary positive numbers), and examples thereof include Li_{1+x+y}Alₓ(Ti,Ge)₂₋ₓSi_{y}P_{3-y}O₁₂ (0 < x < 2, 0 < y < 3) (LATP).

Examples of the LISICON-type oxide include an oxide represented by Li₄M³O₄-Li₃M⁴O₄ (M³ is one or more elements selected from the group consisting of Si, Ge, and Ti, and M⁴ is one or more elements selected from the group consisting of P, As, and V).

Examples of the garnet-type oxide include Li-La-Zr-based oxides such as Li₇La₃Zr₂O₁₂ (LLZ) and Li₇₋ₐ₂La₃Zr₂₋ₐ₂Taₐ₂O₁₂ (LLZT, a2 may be 0 < a2 < 1, 0.1 < a2 < 0.8, or 0.2 < a2 < 0.6).

The oxide-based solid electrolyte may be a crystalline material or an amorphous material.

Examples of the oxide-based solid electrolyte include Li_{6.6}La₃Zr_{1.6}Ta_{0.4}O₁₂ and Li_{0.33}La_{0.55}TiO₃.

### (Sulfide-based Solid Electrolyte)

Examples of the sulfide-based solid electrolyte include a Li₂S-P₂S₅-based compound, a Li₂S-SiS₂-based compound, a Li₂S-GeS₂-based compound, a Li₂S-B₂S₃-based compound, a Li₂S-P₂S₃-based compound, LiI-Si₂S-P₂S₅, LiI-Li₂S-P₂O₅, LiI-Li₃PO₄-P₂S₅, and Li₁₀GeP₂S₁₂.

Note that, in the present description, the expression "-based compound" indicating a sulfide-based solid electrolyte is used as a generic term for solid electrolytes mainly containing a raw material such as "Li₂S" or "P₂S₅" described before "-based compound". For example, the Li₂S-P₂S₅-based compound includes a solid electrolyte containing Li₂S and P₂S₅ and further containing other raw materials. In addition, the Li₂S-P₂S₅-based compound also includes a solid electrolyte in which a mixing ratio of Li₂S and P₂S₅ is different.

Examples of the Li₂S-P₂S₅-based compound include Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, and Li₂S-P₂S₅-ZₘSₙ (m and n are positive numbers, and Z is Ge, Zn or Ga).

Examples of the Li₂S-SiS₂-based compound include Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-SiS₂-Li₃PO₄, Li₂S-SiS₂-Li₂SO₄, and Li₂S-SiS₂-LiₓMO_{y} (x and y are positive numbers, and M is P, Si, Ge, B, Al, Ga, or In).

Examples of the Li₂S-GeS₂-based compound include Li₂S-GeS₂ and Li₂S-GeS₂-P₂S₅.

The sulfide-based solid electrolyte may be a crystalline material or an amorphous material.

### (Hydride-based Solid Electrolyte)

Examples of the hydride-based solid electrolyte material include LiBH₄, LiBH₄-3KI, LiBH₄-PI₂, LiBH₄-P₂S₅, LiBH₄-LiNH₂, 3LiBH₄-LiI, LiNH₂, Li₂AlH₆, Li(NH₂)₂I, Li₂NH, LiGd(BH₄)₃Cl, Li₂(BH₄)(NH₂), Li₃(NH₂)I, and Li₄(BH₄)(NH₂)₃.

Examples of the second solid electrolyte material include compounds in which a part or all of Li of the compounds listed as specific examples of the oxide-based solid electrolyte, the sulfide-based solid electrolyte, or the hydride-based solid electrolyte is substituted with Na, K, Rb, or Cs.

The electrolyte layer may be one formed of an electrolyte composition. The electrolyte composition may contain a solid electrolyte material, and if necessary, a polymer electrolyte, a binding resin, an organic solvent, an ionic liquid, or the like. The solid electrolyte material may contain at least one type of the first solid electrolyte material and the second solid electrolyte material described above.

The positive electrode material contains a positive electrode active material, and may contain a solid electrolyte material, a polymer electrolyte, a binding resin, a conductive aid, an organic solvent, an ionic liquid, or the like as necessary.

The positive electrode active material is not particularly limited, and examples thereof include an alkali metal composite oxide containing an alkali metal element and a transition metal element. The transition metal element may be at least one type selected from the group consisting of V, Cr, Mn, Fe, Co, Ni, Cu, and Al, and Ni may be contained. For example, when the alkali metal element is lithium (that is, in the case of a lithium composite oxide,), examples of the lithium-containing composite oxide include LiCoO₂, LiNiO₂, LiMn₂O₄, LiNi_{0.5}Mn_{1.5}O₄, Li₂MnO₃, LiNiₓMn_{y}Co_{1-x-y}O₂ [0 < x + y < 1], LiNiₓCo_{y}Al_{1-x-y}O₂ [0 < x + y < 1], LiCr_{0.5}Mn_{0.5}O₂, LiFePO₄, Li₂FeP₂O₇, LiMnPO₄, LiFeBO₃, Li₃V₂(PO₄)₃, Li₂CuO₂, Li₂FeSiO₄, and Li₂MnSiO₄. When the positive electrode active material contains an alkali metal element other than Li, specific examples thereof include those in which Li in the above specific examples is replaced with another alkali metal. Examples of the alkali metal other than Li include Na and K.

A method for producing a battery of the present embodiment is not particularly limited, and may be one including a step of producing a negative electrode by pressurizing a negative electrode material. The production method may further include a step of producing an electrolyte layer by pressurizing an electrolyte composition. The step of producing a negative electrode by pressurizing a negative electrode material and the step of producing an electrolyte layer by pressurizing an electrolyte composition may be performed simultaneously. In this case, the negative electrode and the electrolyte layer are produced by disposing the electrolyte composition on the negative electrode material and pressurizing these members together. In addition, the positive electrode may be formed by disposing the positive electrode or disposing the positive electrode material on the electrolyte layer, followed by pressurization.

### Examples

### (Example 1)

As a negative electrode active material, carbon-coated Li₄Ti₅O₁₂ (hereinafter, also referred to as LTO) was used.

### <Preparation of Solid Electrolyte Material>

### (Example 1)

In an argon atmosphere having a dew point of -70°C or lower (hereinafter referred to as a dry argon atmosphere), LiCl, ZrCl₄, and LiBr were weighed in a molar ratio of 1.5 : 1 : 0.5 to prepare a raw material.

The above-described raw material was put in a zirconia pot for a planetary ball mill, and 65 g of zirconia balls having a diameter of 4 mm were put therein. A solid electrolyte material (Li₂ZrCl_{5.5}Br_{0.5}) was obtained by performing a treatment so as to cause a mechanochemical reaction under the conditions of 48 hours and 380 rpm by a planetary ball mill apparatus (PM 400, manufactured by Verder Scientific GmbH & Co. KG). The ball mill was operated in a mode in which the ball mill is stopped for 1 minute as an interval after every 10 minutes of rotation, and the rotation direction is alternately switched between clockwise and counterclockwise.

### <Preparation of Secondary Battery>

In a dry argon atmosphere, 37 parts by mass of the solid electrolyte material, 60 parts by mass of LTO, and 3 parts by mass of acetylene black were weighed, and mixed in a mortar to obtain a mixture.

In an insulating cylinder having an inner diameter of 10 mm, 100 mg of the solid electrolyte material and 15 mg of the mixture were layered in this order to obtain a laminate. A pressure of 370 MPa was applied to the laminate to form a first electrode (the layer of the mixture) and a first solid electrolyte layer (the layer of the solid electrolyte material of Example 1).

Subsequently, 60 mg of a sulfide solid electrolyte Li₆PS₅Cl was placed so as to come into contact with the first solid electrolyte layer to obtain a laminate. A pressure of 370 MPa was applied to the laminate to form a second solid electrolyte layer. The first solid electrolyte layer was sandwiched between the first electrode and the second solid electrolyte layer.

Subsequently, 60 mg of an In foil was placed so as to come into contact with the second solid electrolyte layer, and 2 mg of a Li foil was further placed so as to come into contact with the In foil to obtain a laminate. A pressure of 370 MPa was applied to the laminate to form a second electrode.

A current collector formed of stainless steel was attached to the first electrode and the second electrode, and lead wires were then attached to the current collector. All members were disposed and sealed in a desiccator. In this way, a secondary battery of Example 1 was obtained.

### (Example 2)

### <Preparation of Solid Electrolyte Material>

In an argon atmosphere having a dew point of -70°C or lower (hereinafter referred to as a dry argon atmosphere), 0.4257 g of LiCl, 0.7044 g of InCl₃, and 0.0784 g of ZrCl₄ were weighed to prepare a raw material.

The above-described raw material was put in a zirconia pot for the following planetary ball mill, and 65 g of zirconia balls having a diameter of 4 mm were put therein. A crude composition of Example 2 was obtained by performing a treatment to cause a mechanochemical reaction under the conditions of 48 hours and 380 rpm.

Planetary ball mill apparatus: PM 400 manufactured by Verder Scientific GmbH & Co. KG

### · Annealing

The crude composition of Example 2 obtained above was heated at 230°C for 5 hours in an argon atmosphere to obtain a compound (lithium-containing chloride) with a preparation composition of Li_{2.89}In_{0.91}Zr_{0.096}Cl₆.

### <Preparation of Secondary Battery>

A secondary battery of Example 2 was prepared in the same manner as in Example 1 except that a first electrode was formed using 50 parts by mass of the solid electrolyte material of Example 2 and 50 parts by mass of LTO.

### (Example 3)

### <Preparation of Secondary Battery>

In a dry argon atmosphere, 50 parts by mass of the solid electrolyte material of Example 2 and 50 parts by mass of LTO were weighed, and mixed in a mortar to obtain a negative electrode material mixture.

In addition, 29 parts by mass of the solid electrolyte material of Example 2, 67 parts by mass of LiNi_{1/3}Mn_{1/3}Co_{1/3}O₃, and 4 parts by mass of acetylene black were weighed, and mixed in a mortar to obtain a positive electrode material mixture.

In an insulating cylinder having an inner diameter of 10 mm, 200 mg of the solid electrolyte material of Example 2 and 15 mg of the positive electrode material mixture were layered in this order to obtain a laminate. A pressure of 370 MPa was applied to the laminate to form a first electrode (the layer of the mixture) and a solid electrolyte layer.

Subsequently, 25 mg of the negative electrode material mixture was placed on the solid electrolyte layer so as to come into contact therewith to obtain a laminate. A pressure of 370 MPa was applied to the laminate to form a second electrode.

A current collector formed of stainless steel was attached to the first electrode and the second electrode, and lead wires were then attached to the current collector. All members were disposed and sealed in a desiccator. In this way, a secondary battery of Example 3 was obtained.

### (Example 4)

### <Preparation of Solid Electrolyte Material>

### · Ball milling

In an argon atmosphere having a dew point of -70°C or lower (hereinafter referred to as a dry argon atmosphere), a total of 1.2 g of Li₂O, ZrCl₄, MgCl₂, and Li₃PO₄ was weighed so as to have a composition of Li₂Zr_{0.95}Mg_{0.05}Cl_{3.9}O(PO₄)_{0.033} in a stoichiometric ratio to prepare a raw material.

The above-described raw material was put in a zirconia pot having a volume of 50 ml for the following planetary ball mill, and 65 g of zirconia balls having a diameter of 4 mm were put therein. A solid electrolyte material of Example 4 was obtained by performing a treatment to cause a mechanochemical reaction under the conditions of 24 hours and 300 rpm.

The ball mill was operated in a mode in which the ball mill is stopped for 1 minute as an interval after every 10 minutes of rotation, and the rotation direction is alternately switched between clockwise and counterclockwise. The preparation composition of the obtained solid electrolyte material is Li_{2.15}ZrCl₄O(PO₄)_{0.05}.

Planetary ball mill apparatus: PM 400 manufactured by Verder Scientific GmbH & Co. KG

### <Preparation of Secondary Battery>

A secondary battery of Example 4 was prepared in the same manner as in Example 1 except that in a dry argon atmosphere, 50 parts by mass of the solid electrolyte material of Example 4 and 50 parts by mass of LTO were weighed and mixed in a mortar to obtain a negative electrode material mixture.

### (Example 5)

### <Preparation of Secondary Battery>

A secondary battery of Example 5 was prepared in the same manner as in Example 3 except that the solid electrolyte material of Example 4 was used in place of the solid electrolyte material of Example 2.

### <Charge/Discharge Test>

As a charge/discharge tester, the following product was used.

Charge/discharge tester: TOSCAT-3100 manufactured by Toyo System Co., Ltd.

A charge/discharge test was performed on the secondary battery at 60°C at two C-rates of 0.05 C (first cycle and second cycle) and 0.1 C (third cycle and fourth cycle).

Discharge was performed up to 0.8 V at a current density corresponding to each C-rate at a constant current (CC charge, CC discharge). In charge, discharge was performed up to 1.3 V at a current density corresponding to each C-rate. Discharge was performed under the condition that the discharge was ended at a capacity per LTO of 140 mAh/g.

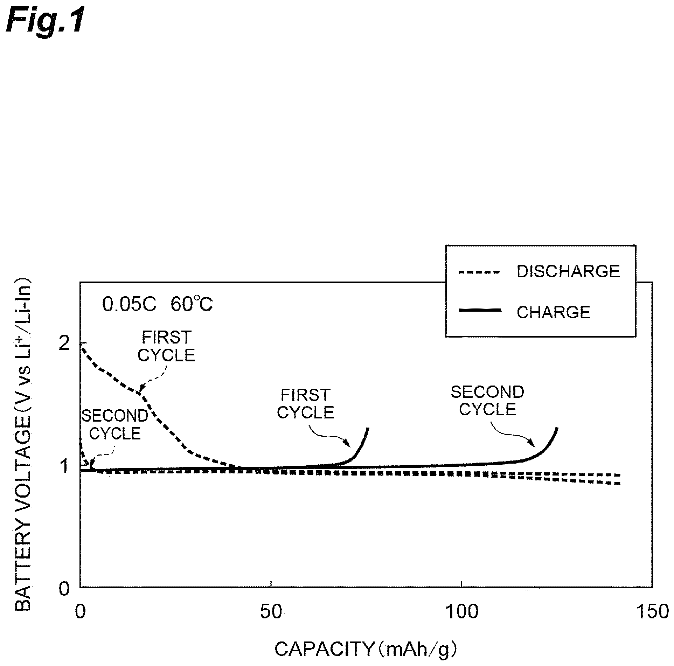

In FIG. 1, the results (first cycle and second cycle) of the charge/discharge test of the secondary battery of Example 1 are shown. In

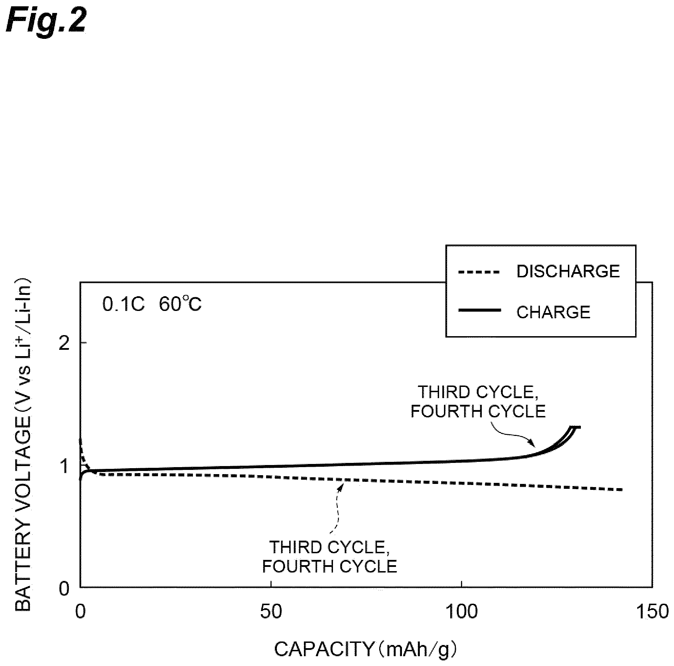

FIG. 2, the results (third cycle and fourth cycle) of the charge/discharge test of the secondary battery of Example 1 are shown. It was verified that charge and discharge could be performed in any cycle, and a discharge capacity of 140mAh/g could be observed.

In the charge/discharge test, since the potential of LTO is higher than that of Li-In, although a setup includes the electrode containing LTO as a positive electrode, it is shown that the battery including the electrode containing LTO operates well, and it is found that the electrode can also be used as a negative electrode.

### <Charge/Discharge Test of Secondary Battery of Example 2>

A charge/discharge test was performed on the secondary battery of Example 2 at 60°C at three different rates of 0.1 C, 0.5 C, and 1 C using the charge/discharge tester.

Discharge was performed up to 0.85 V at a current density corresponding to each C-rate at a constant current (CC charge, CC discharge). In charge, charge was performed up to 1.3 V at a current density corresponding to each C-rate.

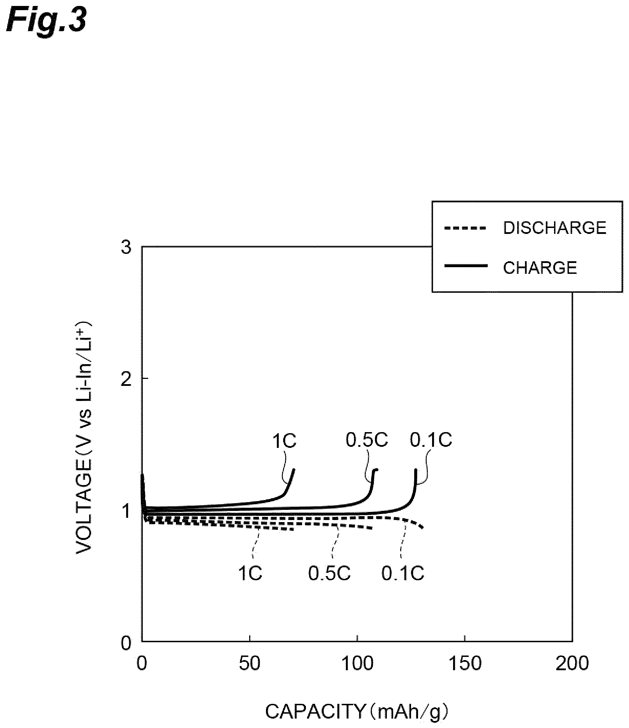

In FIG. 3, the results of the charge/discharge test of the secondary battery of Example 2 are shown.

In the charge/discharge test, since the potential of LTO is higher than that of Li-In, although a setup includes the electrode containing LTO as a positive electrode, it is shown that the battery including the electrode containing LTO operates well, and it is found that the electrode can also be used as a negative electrode.

### <Charge/Discharge Test of Secondary Battery of Example 3>

A charge/discharge test was performed on the secondary battery of Example 3 at 60°C at four different rates of 0.05 C, 0.1 C, 0.5 C, and 1 C using the charge/discharge tester. The current density corresponding to each rate is shown in Table 1.

**[Table 1]**

| C-rate | Current density (mA/cm²) |
|---|---|
| 0.1 C | 0.19 |
| 1C | 1.9 |
| 3C | 5.8 |

Charge was performed up to 2.75 V at a current density corresponding to each C-rate at a constant current and a constant voltage (CCCV charge).

In discharge, discharge was performed up to 0.95 V at a current density corresponding to each C-rate.

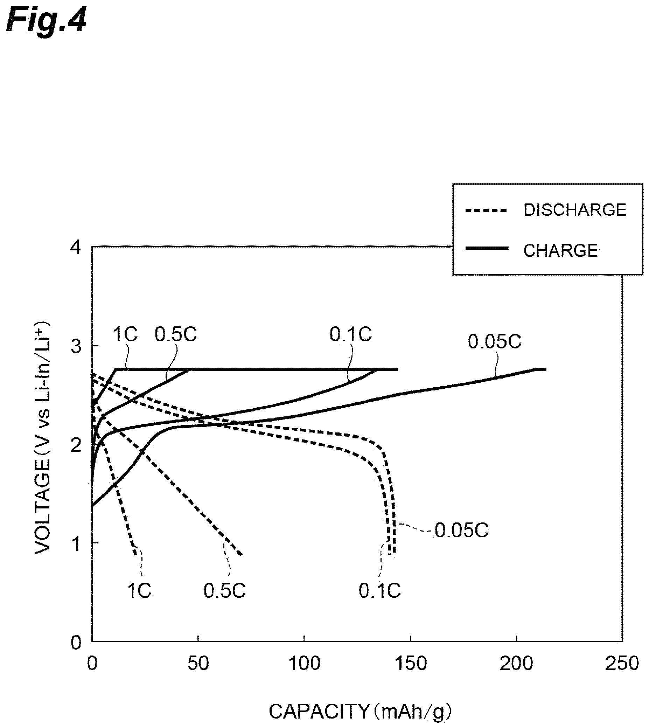

In FIG. 4, the results of the charge/discharge test of the secondary battery of Example 3 are shown.

### <Charge/Discharge Test of Secondary Battery of Example 4>

A charge/discharge test was performed on the secondary battery of Example 4 at 60°C at two different rates of 0.1 C and 0.5 C using the charge/discharge tester.

Discharge was performed up to 0.85 V at a current density corresponding to each C-rate at a constant current (CCCV charge, CC discharge). In charge, charge was performed up to 1.3 V at a current density corresponding to each C-rate.

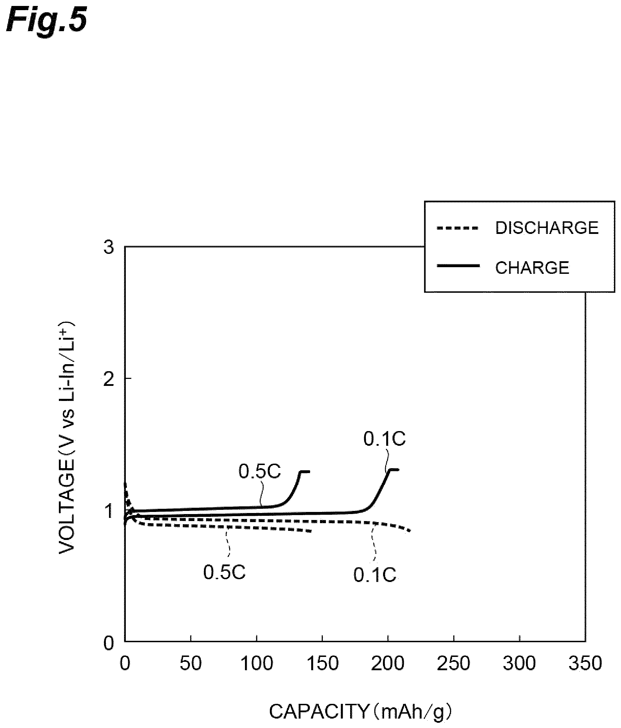

In FIG. 5, the results of the charge/discharge test of the secondary battery of Example 4 are shown.

In the charge/discharge test, since the potential of LTO is higher than that of Li-In, although a setup includes the electrode containing LTO as a positive electrode, it is shown that the battery including the electrode containing LTO operates well, and it is found that the electrode can also be used as a negative electrode.

### <Charge/Discharge Test of Secondary Battery of Example 5>

A charge/discharge test was performed on the secondary battery of Example 3 at 25°C at four different rates of 0.05 C, 0.1 C, 0.5 C, and 1 C using the charge/discharge tester.

Charge was performed up to 2.75 V at a current density corresponding to each C-rate at a constant current and a constant voltage (CCCV charge). The current density corresponding to each C-rate is shown in Table 1 above.

In discharge, discharge was performed up to 0.95 V at a current density corresponding to each C-rate.

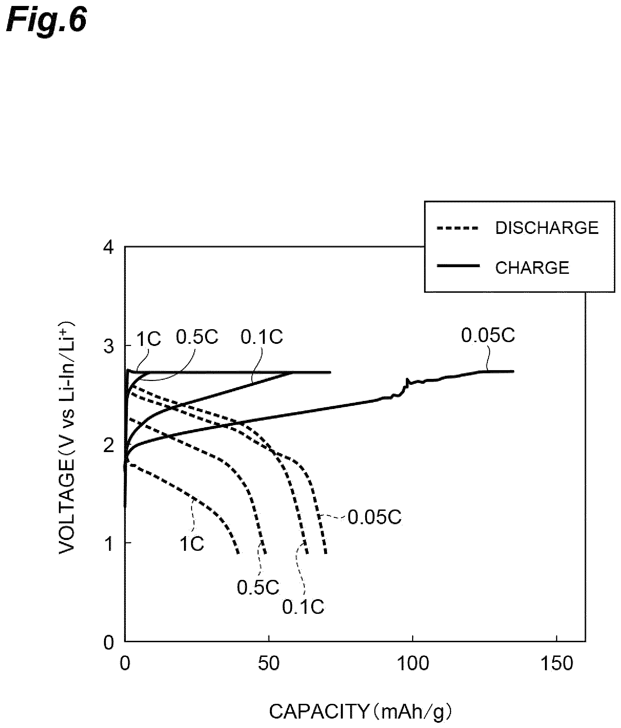

In FIG. 6, the results of the charge/discharge test of the secondary battery of Example 5 are shown.

### (Comparative Example 1)

Li₃YCl₆ was obtained under conditions similar to those in Example 1 except that a total of 4 g of LiCl and YCl₃ was added as a raw material so that the composition ratio was Li₃YCl₆, 65 g of zirconia balls were added, and ball milling was performed under the conditions of 300 rpm and 24 hours.

A charge/discharge test was performed under similar conditions except that Li₃YCl₆ was used in place of the solid electrolyte material of Example 1, but charge and discharge could not be performed.

## Claims

1. A negative electrode material, comprising a negative electrode active material and a solid electrolyte material, wherein
the solid electrolyte material contains an alkali metal element, a metal element except alkali metal elements or a metalloid element, and a halogen element, and
the metal element except alkali metals or the metalloid element includes at least one of Zr and In.

2. The negative electrode material according to claim 1, wherein in the solid electrolyte material, a total substance amount of Zr and In is larger than a total substance amount of the alkali metal element, and the metal element except Zr and In or the metalloid element.

3. The negative electrode material according to claim 1 or 2, wherein in the solid electrolyte material, a content of Y in terms of substance amount is smaller than a total substance amount of Zr and In.

4. The negative electrode material according to claim 1 or 2, wherein
the solid electrolyte material contains a compound represented by A_{α}M_{β}Z_{γ}D_{ζ}O_{η},
wherein A is an alkali metal element, M is at least one of Zr and In, Z is a halogen element, D is at least one of P and S, and 1.6 ≤ α ≤ 3.5, 0 < β ≤ 1.2, 3 ≤ γ ≤ 6.5, 0 ≤ ζ ≤ 0.5, and 0 ≤ η ≤ 2 are satisfied.

5. The negative electrode material according to claim 1 or 2, wherein a volume ratio of the negative electrode active material to a total volume of the negative electrode active material and the solid electrolyte material is 0.30 to 0.90.

6. The negative electrode material according to claim 1 or 2, wherein the negative electrode active material is an oxide containing titanium.

7. The negative electrode material according to claim 1 or 2, further comprising an ionic liquid.

8. A negative electrode, comprising the negative electrode material according to claim 1 or 2.

9. A battery, comprising the negative electrode according to claim 8.
